# EUROPEAN PATENT APPLICATION

(11) **EP 1 721 739 A1**
(43) Date of publication of application: **15.11.2006**
(21) Application number: 05103800.8
(22) Date of filing: 09.05.2005
(51) Int. Cl.: B32B 27/32, B32B 27/36, F16C 13/00, B60R 19/18, B29C 41/22, B29C 41/04

(54) **Bi-layer rotomoulding applications**

(71) Applicant: TOTAL PETROCHEMICALS RESEARCH FELUY, 7181 Seneffe (Feluy) (BE)
(72) Inventor: Maziers, Eric, B-7180, Seneffe (BE)

(57) **Abstract**

Bi-layer articles prepared by rotational moulding comprising:
a. an internal layer prepared from a composition comprising from 50 to 100 wt% of polyethylene (PE) and from 50 to 0 wt% of functionalised polyolefin and;
b. an external layer prepared from polyetherester or saturated polyester or polycarbonate

wherein the adhesion between the two layers is achieved by the internal layer composition.

## Description

The present invention is related to the field of bi-layer rotomoulded articles wherein the external layer is prepared from polyetherester or saturated polyester or polycarbonate and the internal layer from metallocene-produced polyethylene.

Polyethylene represents more than 80 % of the polymers used in the rotomoulding market. This is due to the outstanding resistance of polyethylene to thermal degradation during processing, to its easy grinding, good flowability, and low temperature impact properties.

Rotomoulding is used for the manufacture of simple to complex, hollow plastic products. It can be used to mould a variety of materials such as polyethylene, polypropylene, polycarbonate polyamide, or polyvinyl chloride (PVC). Linear low density polyethylene is preferably used as disclosed for example in "Some new results on rotational moulding of metallocene polyethylenes" by D. Annechini, E. Takacs and J. Vlachopoulos in ANTEC, vol. 1, 2001.

Polyethylenes prepared with a Ziegler-Natta catalyst are generally used in rotomoulding, but metallocene-produced polyethylenes are desirable, because their narrow molecular distribution allows better impact properties and shorter cycle time in processing.

The metallocene-produced polyethylenes of the prior art (see ANTEC, vol. 1, 2001) suffer from high shrinkage and warpage and for some applications from their whiteness in their natural state.

Plastoelastomeric compositions such as described in US-5,457,159 can also be used in rotomoulding, but they require complex processing steps of mixing and vulcanisation.

US-6,124,400 discloses the use for rotomoulding of polymer alloys containing semicrystalline polyolefin sequences with chains of different controlled microstructure prepared in a "one-pot" polymerisation process from a single monomer. The polymerization of these polymer alloys requires a complex catalyst system comprising organometallic catalyst precursors, cationic forming cocatalysts and cross-over agents.

It is thus desired to produce articles prepared with two or more layers of similar or dissimilar material in order to improve the final properties of the finished product. For example, it may be desirable to combine the good shock absorber and impact properties of polyether ester with the acceptable food contact and qualities of polyethylene, such as for example low cost and good impact at low temperature.

It is an aim of the present invention to prepare rotomoulded articles having good adherence between layers of dissimilar material.

It is another aim of the present invention to prepare rotomoulded articles having good permeation resistance.

It is a further aim of the present invention to prepare rotomoulded articles having a good shock absorbing properties.

It is yet another aim of the present invention to prepare rotomoulded articles upon which it is easy to glue additional parts.

It is also an aim of the present invention to prepare rotomoulded articles that have a soft touch.

It is yet a further aim of the present invention to prepare rotomoulded articles that have anti-slip properties when dry.

It is another aim of the present invention to prepare rotomoulded articles that have either hydrophilic or hydrophobic properties.

Accordingly, the present invention discloses a bi-layer article prepared by rotational moulding that comprises:
a. an internal layer prepared from a composition comprising from 50 to 100 wt% of polyethylene (PE) and from 50 to 0 wt% of functionalised polyolefin and;
b. an external layer prepared from polyetherester or saturated polyester or polycarbonate
   wherein the adhesion between the two layers is achieved by the internal layer composition.

Preferably, the innermost layer composition comprises polyethylene (PE), said PE being prepared with a Ziegler-Natta or a metallocene-based catalyst system.

The articles may contain additional layers for which the adherence is provided by conventional methods such as for example by a bonding layer.

The composition of the inner layer comprises preferably from 70 to 99.5 wt%, more preferably from 80 to 99 wt% of polyethylene, and preferably from 0.5 to 30 wt%, and more preferably from 1 to 20 wt% of functionalised polyolefin. The functionalised polyolefins are preferably selected from grafted polyethylene, from ionomers or from mixtures thereof.

The external layer may contain essentially polyetherester, saturated polyester or polycarbonate or a mixture thereof as major component with a minor component selected from the group consisting of polyether-block co-polyamide, thermoplastic polyurethane and fluoropolymer.

By major component it is meant that such a component makes up more than 50 % by weight. By minor component it is meant that such a component makes up less than 50 % by weight.

The polyetheresters are copolymers having polyester blocks and polyether blocks. They typically consist of soft polyether blocks, which are the residues of polyetherdiols, and of hard segments (polyester blocks), which usually result from the reaction of at least one dicarboxylic acid with at least one chain-extending short diol unit. The polyester blocks and the polyether blocks are generally linked by ester linkages resulting from the reaction of the acid functional groups of the acid with the OH functional groups of the polyetherdiol. The short chain-extending diol may be chosen from the group consisting of neopentyl glycol, cyclohexanedimethanol and aliphatic glycols of formula HO(CH₂)ₙOH in which n is an integer varying from 2 to 10. Advantageously, the diacids are aromatic dicarboxylic acids having from 8 to 14 carbon atoms. Up to 50 mol% of the dicarboxylic aromatic acid may be replaced with at least one other dicarboxylic aromatic acid having from 8 to 14 carbon atoms, and/or up to 20 mol% may be replaced with a dicarboxylic aliphatic acid having from 2 to 12 carbon atoms.

As examples of dicarboxylic aromatic acids, mention may be made of terephthalic, isophthalic, dibenzoic, naphthalenedicarboxylic acids, 4,4'-diphenylenedicarboxylic acid, bis(p-carboxyphenyl)methane acid, ethylenebis(p-benzoic acid), 1,4-tetramethylenebis(p-oxybenzoic acid), ethylenebis(paraoxybenzoic acid) and 1,3-trimethylene bis(p-oxybenzoic acid). As examples of glycols, mention may be made of ethylene glycol, 1,3-trimethylene glycol, 1,4-tetramethylene glycol, 1,6-hexamethylene glycol, 1,3-propylene glycol, 1,8-octamethylene glycol, 1,10-decamethylene glycol and 1,4-cyclohexylenedimethanol. The copolymers having polyester blocks and polyether blocks are, for example, copolymers having polyether blocks derived from polyether diols, such as polyethylene glycol (PEG), polypropylene glycol (PPG) or polytetramethylene glycol (PTMG), dicarboxylic acid units, such as terephthalic acid, and glycol (ethanediol) or 1,4-butanediol units. The chain-linking of the polyethers and diacids forms soft segments while the chain-linking of the glycol or the butanediol with the diacids forms the hard segments of the copolyetherester. Such copolyetheresters are disclosed for example in EP 402 883 and EP 405 227. These polyetheresters are thermoplastic elastomers. They may contain plasticizers.

Polyetheresters can for example be obtained from Du Pont Company under the Hytrel® trademark.

Saturated polyester resins are polycondensation products of dicarboxylic acids with dihydroxy alcohols. They are a special kind of alkyd resin that are usually not modified with fatty acids or drying oils and they have the ability, when catalysed, to cure or harden at room temperature under little or no pressure. The preferred saturated polyesters are polyalkylene terephthalate, more preferably polyethylene terephthalate (PET) and polybutylene terephthalate (PBT).

Saturated polyesters can for example be obtained from Cyclics under the name Cyclics CBT®.

Polycarbonate (PC) is a thermoplastic resin obtained from a dihydroxy compound and a carboxylic acid derivative or a carbonate diester. The preferred polycarbonate is the condensation product of bisphenol A and phosgene.

Polyether-block co-polyamides are represented by the general formula

HO-[C(O)-PA-C(O)-O-PEth-O]ₙ-H (I)

wherein PA represents the polyamide segment and PEth the polyether segment. For example the polyamide segment can be a PA 6, PA 66, PA 11 or a PA 12. The polyether segment can for example be a polyethylene glycol (PEG) or a polypropylene glycol (PPG) or a polytetramethylenglycol (PTMG). The molecular weight Mₙ of the polyamide sequence is usually between 300 and 15,000. The molecular weight Mₙ of the polyether sequence is usually between 100 and 6000. Such materials are commercially available for example from Arkema under the Pebax® trade name.

The copolymers having polyamide blocks and polyether blocks are generally obtained from the polycondensation of polyamide blocks having reactive end groups with polyether blocks having reactive end groups, such as, *inter alia:*
1) polyamide blocks having diamine chain ends with polyoxyalkylene blocks having dicarboxylic chain ends;
2) polyamide blocks having dicarboxylic chain ends with polyoxyalkylene blocks having diamine chain ends, obtained by cyanoethylation and hydrogenation of aliphatic dihydroxylated α,ω-polyoxyalkylene blocks called polyetherdiols; and
3) polyamide blocks having dicarboxylic chain ends with polyetherdiols, the products obtained being, in this particular case, polyetheresteramides.

The polyamide blocks having dicarboxylic chain ends derive, for example, from the condensation of polyamide precursors in the presence of a chain-stopping carboxylic diacid.

The polyamide blocks having diamine chain ends derive, for example, from the condensation of polyamide precursors in the presence of a chain-stopping diamine.

The polymers having polyamide blocks and polyether blocks may also include randomly distributed units. These polymers may be prepared by the simultaneous reaction of the polyether and of the precursors of the polyamide blocks.

For example, a polyetherdiol, polyamide precursors and a chain-stopping diacid may be made to react together. A polymer is obtained which essentially has polyether blocks and polyamide blocks of very variable length, but in addition the various reactants that have reacted randomly, which are distributed in a random fashion along the polymer chain.

A polyether diamine, polyamide precursors and a chain-stopping diacid may also be made to react together. A polymer is obtained which has essentially polyether blocks and polyamide blocks of very variable length, but also the various reactants that have reacted randomly, which are distributed in a random fashion along the polymer chain.

The amount of polyether blocks in these copolymers having polyamide blocks and polyether blocks is advantageously from 10 to 70% and preferably from 35 to 60% by weight of the copolymer.

The polyetherdiol blocks may either be used as such and copolycondensed with polyamide blocks having carboxylic end groups, or they may be aminated in order to be converted into polyetherdiamines and condensed with polyamide blocks having carboxylic end groups. They may also be blended with polyamide precursors and a diacid chain stopper in order to make the polymers having polyamide blocks and polyether blocks with randomly distributed units.

The number-average molar mass Mₙ of the polyamide blocks is usually between 300 and 15,000, except in the case of the polyamide blocks of the second type. The mass Mₙ of the polyether blocks is usually between 100 and 6000.

The polyurethanes, if present, typically consist of soft polyether blocks, which usually are residues of polyetherdiols, and hard blocks (polyurethanes), which may result from the reaction of at least one diisocyanate with at least one short diol. The short chain-extending diol may be chosen from the glycols mentioned above in the description of the polyether esters. The polyurethane blocks and polyether blocks are linked by linkages resulting from the reaction of the isocyanate functional groups with the OH functional groups of the polyether diol.

Thermoplastic polyurethanes can for example be obtained from Elastogran GmbH under the Elastollan® trade name or from Dow Chemical Company under the Pellethane® trade name.

The fluoropolymers suited as processing aid in the present invention are for example polymers of vinylidene fluoride (H₂C=CF₂) and/or copolymers of vinylidene fluoride and hexafluoropropylene (F₂C=CF-CF₃). Though the copolymers of vinylidene fluoride and hexafluoropropylene do not have elastomeric properties they are commonly referred to as "fluoroelastomers". The content of the comonomer hexafluoropropylene in a fluoroelastomer is usually in the range of 30 to 40 % by weight. Fluoropolymers suited as processing aids in the current invention are for example commercially available under the Dynamar® , Viton® and Kynar® trade names from Dyneon, DuPont-Dow Elastomers or Arkema.

Polyethylenes prepared with a Ziegler-Natta or with metallocene catalyst or with late transition metal catalyst systems are typically used in rotomolding applications. Linear low density polyethylene is preferably used as disclosed for example in "Some new results on rotational molding of metallocene polyethylenes" by D. Annechini, E. Takacs and J. Vlachopoulos in ANTEC, vol. 1, 2001.

The preferred polyethylene according to the present invention is a homo- or copolymer of ethylene produced with a catalyst comprising a metallocene on a silica/aluminoxane support. More preferably, the metallocene component is ethylene-bis-tetrahydroindenyl zirconium dichloride or bis-(n-butyl-cyclopentadienyl) zirconium dichloride or dimethylsilylene-bis(2-methyl-4-phenyl-indenyl) zirconium dichloride. The most preferred metallocene component is ethylene-bis-tetrahydroindenyl zirconium dichloride.

In this description, the term copolymer refers to the polymerization product of one monomer and one or more comonomers.

The melt index of the polyethylene resin preferably used in the present invention typically falls in the range 0.1 to 25 dg/min, preferably in the range 0.2 to 15 dg/min and most preferably in the range 0.5 to 10 dg/min. The melt flow index MI2 is measured following the method of standard test ASTM D 1283 at a temperature of 190°C and a load of 2.16 kg.

The homo- and co-polymers of ethylene that can be used in the present invention preferably have a density in the range 0.910 to 0.975 g/ml and more preferably in the range 0.915 to 0.955 g/ml. The density is measured following the method of standard test ASTM D 1505 at 23°C.

The polyethylene of the present invention may also have a bi- or multimodal molecular weight distribution, i.e. they may be a blend of two or more polyolefins with different molecular weight distributions, which can be blended either physically or chemically, i.e. produced sequentially in two or more reactors.

The polydispersity D of the polyoethylene suitable for the present invention is in the range 2 to 20, preferably 2 to 8, more preferably less than or equal to 5, and most preferably less than or equal to 4, the latter range being typically associated with the preferred metallocene-prepared polyethylene resins. The polydispersity index D is defined as the ratio Mw/Mn of the weight average molecular weight Mw over the number average molecular weight Mn.

The polyolefins of the present invention may also comprise other additives such as for example antioxidants, acid scavengers, antistatic additives, fillers, slip additives or anti-blocking additives.

The functionalised polyolefins, if present are polyolefins grafted with a material that provides polarity and/or reactivity and they therefore depend upon the nature of the adjacent layers. Preferably in the present invention, the polyolefins are grafted with anhydride and preferably, the polyolefin is polyethylene or polypropylene, more preferably, it is polyethylene. Alternatively, the functionalised polyolefin is an ionomer. Grafted polyethylene provides excellent adhesion properties whereas ionomers enhance mechanical properties. In a more preferred embodiment according to the present invention, the functionalised polyolefin is a mixture of ionomer and grafted polyethylene.

It is easy to glue additional parts on the external layer of a rotomoulded if said layer is prepared with polyetherester.

In addition, the external layer can be selected either from polyetherester or from saturated polyester or from polycarbonate depending upon the desired final properties such as for example:
- excellent shock absorption;
- excellent impact properties;
- soft touch;
- same good barrier properties as polyamide but at a lesser cost;
- anti-slip when dry and slippery when wet
- broad range of working temperature
- good hardness
- scratch resistance.
   Other layers may be added either by repeating the present invention as many times as necessary or by using bonding layers.

The thickness of each layer is determined by the size of the final product, by the desired properties and by the cost: it can vary from 1 mm up to several cm.

The external layer typically represents from 5 to 50 % of the total wall thickness.

The size of the rotomoulded articles varies from 0.1 L up to 70 m³. Because of their excellent impact and shock absorbing properties, the rotomoulded articles prepared according to the present invention can be large, such as drums, bumpers or large containers.

The present invention also discloses a process for preparing bi-layer rotomoulded articles by sequentially feeding in one shot the material necessary for each one layer and wherein the internal layer prepared from the polyethylene composition provides adhesion between the internal and external layers

Multi-layer objects can be prepared either by manual introduction of material during the moulding cycle or by the use of a drop-box or by a one-shot system.

Manual addition involves moving the mould from the oven, removing a vent tube or plug that creates an opening in the part and adding more material using a fennel or wand. This operation must be repeated for each additional layer.

A drop-box typically contains a single material layer and it is an insulated container that holds material until it is released at the appropriate time during the cycle. The signal for release of material is usually transmitted as a pressure pulse via the airline through the arm of the machine. The insulation must be kept cool to prevent the material inside the box from melting.

In either method, there are critical factors such as:
- the temperature at which the subsequent layer is added: it is critical for determining the wall thickness of the previous skin formed and how well the two layers may be bound together;
- the time elapsed before addition of the subsequent layer of material: if the mould is at rest for too long, material that has already adhered to the wall may sag;
- the crystallisation temperature of the different layers: they should not be too different.
   It is possible to reduce these problems by lowering the melt index of the first layer and/or by reducing the injection temperature of the next layer, and/or by cooling the mould slightly before injection or the next layer.

### List of figures.

Figure 1 represents the microscopy analysis of the interlayer region of a rotomoulded article wherein the internal layer is prepared from a polyethylene compound and the external is prepared from pure Pebax®.

Figure 2 represents the apparatus used for measuring the impact strength of the samples.

Figure 3 represents the impact strength expressed in Newtons as a function of time expressed in ms, and where peak energy is marked by P. The deformation of the article as a function of time is also indicated on the graph.

### Examples.

Several rotomoulded articles were prepared as follows.

The resin for the inner layer was a blend prepared by compounding 97 wt% of a polyethylene resin prepared with a metallocene catalyst system based on ethylene-bis-tetrahydro-indenyl zirconium dichloride and having a melt flow index MI2 of 4 dg/min, and a density of 0.940 g/cm³, with 3 wt% of graphted polyethylene.

All test mouldings were carried out on the ROTOSPEED rotational moulding machine. It is a carrousel-style machine with offset arm, LPG burner arm with a burner capacity of 523 kW/hr, air fan cooling, and a maximum plate diameter of 1.5 m.

An aluminum box mould was used to produce the test mouldings. The mould was equipped with a draft angle to facilitate demoulding and the bi-layer articles were prepared by the use of a drop box. The drop box was filled with the material needed for the first layer and then attached to the lid of the mould. A pneumatic ram in the drop box held the material in place until the required temperature was reached, the ram was then activated and the material was dropped in. That operation was repeated for each layer under the conditions described below.

Two-layer structures were prepared using a two-shot process as follows:
- 600 g of Pebax in powder form were added to a 10 litres mould;
- the mould was placed in an oven pre-heated at a temperature of 300 °C;
- when the mould reached an internal temperature of 180 °C, it was removed from the oven;
- the mould was open and 600 g of the polyethylene blend were added through the vent;
- the mould was placed again in the pre-heated oven;
- when the mould reached an internal temperature of 220 °C, it was removed from the oven;
- the mould was cooled in air at room temperature for a period of time of 30 minutes;
- the rotomoulded part is removed from the mould when the temperature is of 70 °C.

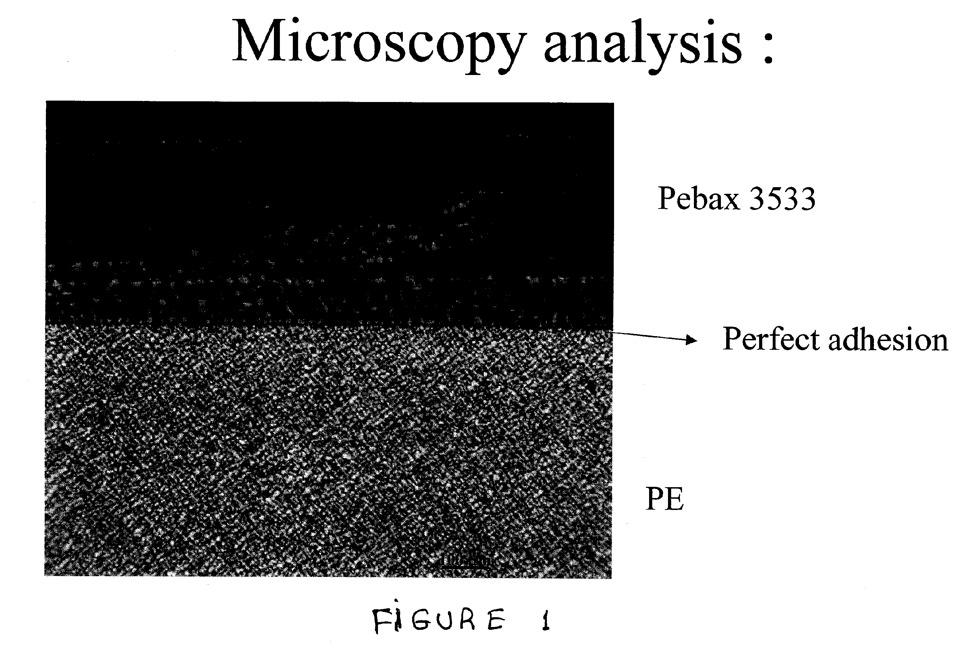

The bi-layer rotomoulded article was characterised by an excellent adhesion between the two layers as can be seen in figure 1.

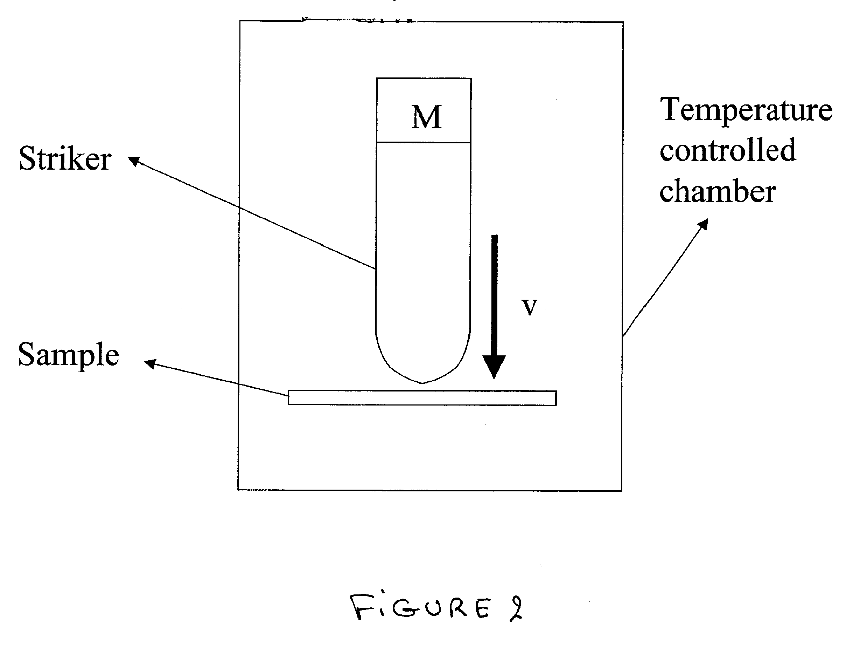

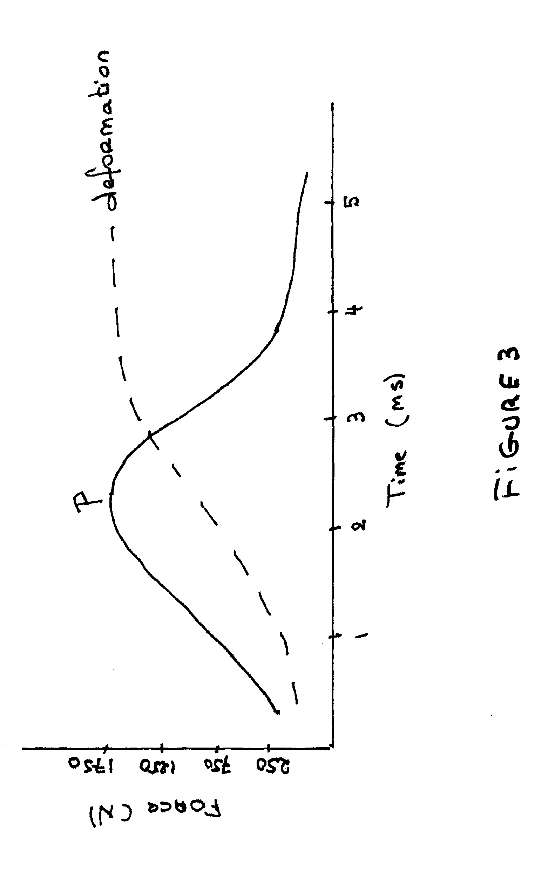

The impact strength was tested at a temperature of -20 °C, using the method of standard test ISO 6602-3. The apparatus used in the test is described in figure 2,
wherein the mass M is of 26.024 kg, the speed v is of 4.43 m/s and the impact energy is of 255 J. The results are represented in figure 3. It can be seen from this figure that passed the peak energy, indicated by P on the curve, the article does not break, indicated by an extended area beyond the peak energy. This is characteristic of a ductile behaviour.

The bi-layer rotomoulded articles of the present invention all had a fully ductile behaviour. The ductility index as measured by the ratio of propagation energy to total energy Eₚᵣₒₚ/Eₜₒₜ was of 50 %, wherein total energy Eₜₒₜ = Eₚₑₐₖ + Eₚᵣₒₚ is the sum of peak energy Eₚₑₐₖ and propagation energy Eₚᵣₒₚ. This is much larger than the ductility index of from 40 to 42 % of pure polyethylene articles prepared and measured under the same conditions. The ductility index of pure polyethylene is indicative of a ductile-brittle behaviour.

## Claims

1. Bi-layer articles prepared by rotational moulding comprising:
a. an internal layer prepared from a composition comprising from 50 to 100 wt% of polyethylene (PE) and from 50 to 0 wt% of functionalised polyolefin and;
b. an external layer prepared from polyetherester, saturated polyester or polycarbonate
wherein the adhesion between the two layers is achieved by the internal layer composition.

2. The bi-layer article according to claim 1 wherein the polyethylene of the internal layer is prepared with a Ziegler-Natta or with a metallocene-based catalyst system.

3. The bi-layer article according to claim 1 or claim 2 wherein the inner layer comprises from 70 to 99.5 wt% of a metallocene-produced polyethylene and from 30 to 0.5 wt% of functionalised polyethylene.

4. The bi-layer article according to claim 3 wherein the functionalised polyolefin is grafted polyethylene, ionomer or mixture thereof.

5. The bi-layer article according to any one of the preceding claims wherein the metallocene catalyst component is bis(tetrahydroindenyl) or bis(n-butylcyclopentadienyl).

6. The bi-layer article according to any one of the preceding claims wherein the external layer is polyetherester or saturated polyester or polycarbonate or mixture thereof as major component with a minor component selected from the group consisting of polyether-block co-polyamide, thermoplastic polyurethane and fluoropolymer.

7. A process for preparing the bi-layer rotomoulded article according to any one of claims 1 to 6 by sequentially feeding in one shot the material necessary for each one layer and wherein the internal layer prepared from the polyethylene composition provides adhesion between the internal and external layers.

8. A drum prepared from the rotomoulded article of any one of claims 1 to 6.

9. A bumper prepared from the rotomoulded article of any one of claims 1 to 6.
